(19) Europäisches Patentamt
European Patent Office
Office européen des brevets

(11) EP 1 593 475 A1

(12) **EUROPEAN PATENT APPLICATION**

(43) Date of publication:
**09.11.2005 Bulletin 2005/45**

(51) Int Cl.[7]: **B29C 44/30**, B29C 44/44, C08J 9/232

(21) Application number: **05006190.2**

(22) Date of filing: **22.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **23.03.2004 JP 2004085081**

(71) Applicant: **JSP CORPORATION**
**Tokyo 100-0005 (JP)**

(72) Inventors:
- **Tanaka, Masahiro c/o Yokkaichi Research Center**
  **Yokkaichi-shi Mie 510-0881 (JP)**
- **Tsunoda, Kenji c/o Yokkaichi Research Center**
  **Yokkaichi-shi Mie 510-0881 (JP)**

(74) Representative: **Müller-Gerbes Wagner Albiger Patentanwälte**
**Friedrich-Breuer-Strasse 112**
**53225 Bonn (DE)**

(54) **Continuous production of foam molding from expanded polyolefin resin beads**

(57) A process for continuously preparing a polyolefin foam molding, wherein expanded polyolefin resin beads are fed between a pair of upper and lower endless belts continuously traveling along a pair of opposing upper and lower surfaces, respectively, within a passage defined by structural members and rectangular in section, the expanded beads feed being then successively passed through a heating zone and a cooling zone within the passage. The expanded polyolefin resin beads have a core-coat structure in which the core is in an expanded state and comprises a crystalline polyolefin resin, while the coat is in a substantially unexpanded state and surrounds the core. The coat comprises a crystalline polyolefin polymer which is lower in melting point by at least 15°C than that of the crystalline polyolefin resin or a substantially non-crystalline polyolefin polymer which is lower in Vicat softening point by at least 15°C than that of the crystalline polyolefin resin.

FIG. 1

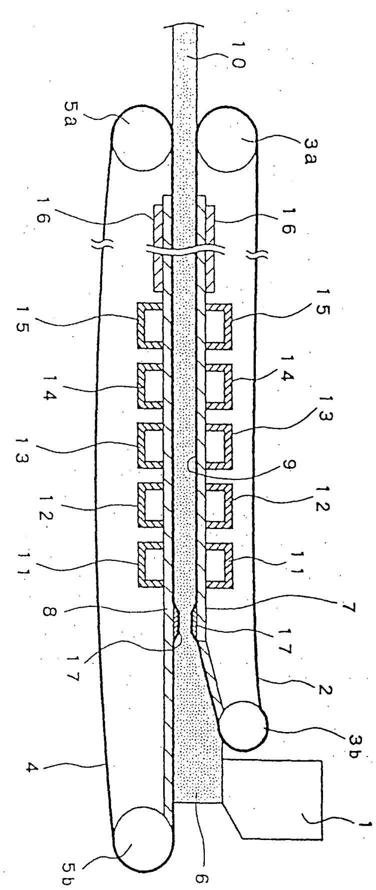

EP 1 593 475 A1

## Description

### Technical Field

The present invention relates to a process for continuously producing a foam plate molding from expanded polyolefin resin beads.

### Background Art

Foam moldings of a polyolefin resin such as a polyethylene resin or a polypropylene resin are suitably used for various applications such as cushioning materials because of their excellent chemical resistance, excellent shock absorbing properties and excellent mechanical strengths.

One known method for continuously producing a polyolefin foam plate includes feeding expanded polyolefin resin beads between a pair of upper and lower endless belts continuously traveling along a passage having a rectangular cross-section, and successively passing the expanded polyolefin resin beads through a heating zone and a cooling zone within the passage. In connection with the known method, Japanese Unexamined Patent Publications No. H09-104026 and No.H09-104027 propose to compress expanded beads before feeding same to the heating step. Japanese Unexamined Patent Publication No.H10-180888 proposes to compress expanded beads having a specific compression recovery rate and then release the compression before feeding same to the heating step. Japanese Unexamined Patent Publications No.2000-15708, No.2000-6253 and No. 2002-240073 disclose a step of reducing the bulk density of expanded beads.

One problem common to the above-proposed methods is that a significantly long cooling time is required in order to sufficiently cool the foam moldings.
Insufficient cooling will cause an abnormal inflation of or stress in the foam moldings. Thus, it is necessary to use a slow line speed or to use a long cooling zone. A slow line speed results in a reduction of productivity and, hence, in an increase of the production costs. A long cooling zone results in an enlargement of the apparatus and, hence, in an increase of the apparatus costs and in a difficulty in installation.

In Japanese Unexamined Patent Publication No. 2000-15,708 suggests the use of two, first and second heating zones connected in series, wherein steam feeds are allowed to flow in the directions opposite to each other for the purpose of improving the line speed and productivity. However, the line speed attained in attained in the working examples is at most 2.5 m/minute using a cooling zone having a length of 6 m.

### Disclosure of the Invention

It is, therefore, an object of the present invention to provide a process which can continuously producing a polyolefin resin foam molding with a higher line speed and improved productivity.

Another object of the present invention is to provide a process of the above-mentioned type in which an apparatus to carry out the process can be compact in size and in which foam moldings obtained are free of a stress or deformation.

In accomplishing the above objects, the present invention provides a process for continuously preparing a polyolefin foam molding, comprising feeding expanded polyolefin resin beads between a pair of upper and lower endless belts continuously traveling along a pair of opposing upper and lower surfaces, respectively, within a passage defined by structural members and rectangular in section, and then successively passing the resin beads through a heating zone and a cooling zone within the passage,

wherein each of the expanded polyolefin resin beads comprises:

a core which is in an expanded state and which comprises a crystalline polyolefin resin, and
a coat which is in a substantially unexpanded state and which surrounds said core, said coat comprising a crystalline polyolefin polymer which is lower in melting point by at least 15°C than that of said crystalline polyolefin resin or a substantially non-crystalline polyolefin polymer which is lower in Vicat softening point by at least 15°C than that of said crystalline polyolefin resin.

The process according to the present invention may be carried out using a conventional apparatus with a higher line speed as compared with the conventional methods without causing an undesirable stress or deformation of the foam moldings. Alternatively, the process of the present invention may be carried out using a more compact apparatus as compared with the conventional apparatuses without a need to increase the line speed.

The present invention will be described in detail below with reference to the accompanying drawing in which:

FIG. 1 is a vertical cross-sectional view diagrammatically illustrating a molding apparatus suitably used to carry out the process of the present invention.

Preferred Embodiment for Carrying Out the Invention

One of the features of the present invention resides in the use of expanded polyolefin resin beads for the production of foam moldings, wherein each of the expanded polyolefin resin beads comprises a core which is in an expanded state and which comprises a crystalline polyolefin resin, and a coat which is in a substantially unexpanded state and which surrounds the core, the coat comprising a crystalline polyolefin polymer which is lower in melting point by at least 15°C than that of the crystalline polyolefin resin or a substantially non-crystalline polyolefin polymer which is lower in Vicat softening point by at least 15°C than that of the crystalline polyolefin resin. In the following description, such composite expanded beads will be referred to simply as expanded beads.

As used herein, the term "crystalline polyolefin resin" is intended to refer to a polyolefin resin which shows a fusion peak (endothermic peak) attributed to the fusion of the polyolefin resin in a DSC curve obtained by heat flux differential scanning calorimeter (DSC device) in accordance with JIS K 7121(1987) in which the condition of "in the case of the measurement of fusion temperature after the sample piece has been heat treated under specified conditions" is adopted (in the adjustment of conditions of the sample piece, the heating and cooling rates are each 10°C/min) and in which the test piece is heated at a rate of 10°C/min.

Examples of the crystalline polyolefin resin constituting the core of the expanded beads include polypropylene resins, polyethylene resins, polybutene resins and polymethylpentene resins. These resins may be used singly or in combination of two or more thereof. Particularly preferably used are propylene homopolymers and random or block copolymers of propylene with one or more co-monomers such as ethylene and/or an α-olefin other than propylene.

As used herein, the term "polyolefin resin" is intended to refer to a homopolymer of an olefin, a copolymer of two or more olefins, a copolymer of an olefin with one or more co-monomers other than olefins or a mixture of one or more of the above homopolymers and/or copolymers. The polyolefin resin generally contains 50 mole % or more, preferably 60 mole % or more, more preferably 80 to 100 mole %, of an olefin.

The term "polypropylene resin" is intended to refer to a homopolymer of propylene, a copolymer of propylene with one or more co-monomers or a mixture of one or more of the above homopolymers and/or copolymers. The polypropylene resin generally contains 50 mole % or more, preferably 60 mole % or more, more preferably 80 to 100 mole %, of propylene.

Similarly, the term "polyethylene resin" is intended to refer to a homopolymer of ethylene, a copolymer of ethylene with one or more co-monomers or a mixture of one or more of the above homopolymers and/or copolymers. The polyethylene resin generally contains 50 mole % or more, preferably 60 mole % or more, more preferably 80 to 100 mole %, of ethylene.

The crystalline polyolefin resin constituting the core of the expanded beads may be used together with other thermoplastic polymer as long as the object of the present invention is not adversely affected. Such thermoplastic polymer may be, for example, a crystalline polystyrene resin, a thermoplastic polyester resin, a polyamide resin, or a fluorocarbon resin. These resins may be used singly or in combination of two or more thereof. The amount of such thermoplastic polymer is preferably 100 parts by weight or less, more preferably 50 parts by weight or less, still more preferably 30 parts by weight or less, yet still more preferably 15 parts by weight or less, most preferably 5 parts by weight or less, per 100 parts by weight of the crystalline polyolefin resin.

If desired, the core may contain one or more additives, such as a catalyst neutralizing agent, a lubricant, an oxidation preventing agent or a nucleating agent, in an amount which does not adversely affect the object of the present invention, preferably in an amount of 40 parts by weight or less, more preferably 30 parts by weight or less, most preferably 0.001 to 15 parts by weight or less, per 100 parts by weight of the crystalline polyolefin resin of the core.

It is preferred that the crystalline polyolefin resin of the core have a melting point (Tm) of 100 to 250°C, more preferably 110 to 170°C, most preferably 120 to 160°C, for reasons of satisfactory heat processability and heat resistance. The crystalline polyolefin resin preferably has a Vicat softening point of 70 to 200°C, more preferably 90 to 160°C, most preferably 110 to 150°C.

As used herein, the term "melting point (Tm)" is intended to refer to a temperature of the apex of the endothermic peak in a DSC curve obtained in the same manner as described above. When two or more endothermic peaks are present, the temperature of the peak having the highest apex relative to the base line of the higher temperature side represents the melting point. When two or more highest peaks are present, then the arithmetic mean of the apex temperatures represents the melting point.

As used herein, the term "Vicat softening point" is intended to refer to a Vicat softening point as measured by the A50 Method in accordance with JIS K 7206(1999).

The coat covering the core of the crystalline polyolefin resin comprises a polyolefin polymer which is selected from crystalline polyolefin polymers showing a clear endothermic peak in the above-described melting point measurement and substantially non-crystalline polymers showing substantially no clear endothermic peak in the above-described melting point measurement. In the heat flux differential scanning calorimetry of a test piece showing substantially no clear endothermic peak, the adjustment of conditions of the sample piece is performed such that the maximum heating temperature does not exceed 220°C. The term "clear endothermic peak" as used herein is intended to refer to a peak having calorific value of at least 2 J/g.

The crystalline polyolefin polymer constituting the coat has a melting point lower by at least 15°C than that of the crystalline polyolefin resin constituting the core. The substantially non-crystalline polyolefin polymer constituting the coat has a Vicat softening point lower by at least 15°C than that of the crystalline polyolefin resin constituting the core. By using the composite expanded beads having a core-coat structure in which the melting point or Vicat softening point of the polyolefin polymer of the coat is lower by at least 15°C than the melting point or Vicat softening point of the crystalline thermoplastic resin of the core, it is possible to shorten the cooling time during the manufacture of the foam moldings from the composite expanded beads. Yet, the foam moldings obtained by the present invention are free of abnormal inflation which would result in deformation thereof. Such an effect of the present invention is considered to be ascribed to the structure of the expanded beads which permits fusion-bonding between the beads to proceed at a relatively low temperature during the heating stage.

Thus, the crystalline polyolefin polymer constituting the coat should have a melting point lower by at least 15°C, preferably by at least 20°C, still more preferably by 20 to 60°C, most preferably by 20 to 40°C, than that of the crystalline polyolefin resin constituting the core. The substantially non-crystalline polyolefin polymer constituting the coat should have a Vicat softening point lower by at least 15°C, preferably by at least 20°C, still more preferably by 20 to 60°C, most preferably by 20 to 40°C, than that of the crystalline polyolefin resin constituting the core.

For reasons of high heat resistance, the crystalline polyolefin polymer of the coat preferably has a melting point of 60°C or more, more preferably 70°C or more, still more preferably 80°C or more, most preferably 90°C or more, while the substantially non-crystalline preferably has a Vicat softening point of 50°C or more, more preferably 60°C or more, still more preferably 70°C or more, most preferably 80°C or more.

When the difference in melting point or Vicat softening point between the crystalline thermoplastic resin of the core and the polyolefin polymer of the coat is less than 15°C, it is necessary to use a high molding temperature for the fusion-bonding of the expanded beads. Therefore, in order to prevent abnormal inflation of the foam moldings produced, it is necessary to cool the foam moldings for a long time. Thus, the object of the present invention is not accomplished.

The polyolefin which forms the coat of the expanded beads of the present invention may be a crystalline polyolefin having a melting point or may be a substantially non-crystalline polyolefin having substantially no melting point.

Examples of the crystalline polyolefin showing a melting point include high pressure low density polyethylene resins, linear low density polyethylene resins, linear very low density polyethylene resins and copolymers of ethylene with one or more co-monomers such as vinyl acetate, unsaturated carboxylic acid esters, unsaturated carboxylic acids and vinyl alcohol. Polypropylene resins or polybutene resins may also be used as the crystalline polyolefin as long as the melting point thereof is lower by at least 15°C than the crystalline thermoplastic resin used in the core.

Examples of the non-crystalline polyolefin showing substantially no melting point include polyethylene-based rubbers (e.g. ethylene-propylene rubbers, ethylene-propylene-diene rubbers, ethylene-acrylic rubbers, chlorinated polyethylene rubbers and chlorosulfonated polyethylene rubbers) and polyolefin elastomers. These rubbers and elastomers may be used singly or as a mixture of two or more.

The coat of the composite expanded beads may contain an additional thermoplastic polymer other than the polyolefin polymer and/or one or more additives, such as a catalyst neutralizing agent, a lubricant, an oxidization preventing agent and a nucleating agent, in such an amount that the object of the present invention is not adversely affected. The amount of the additional thermoplastic polymer is preferably 100 parts by weight or less, more preferably 50 parts by weight or less, still more preferably 30 parts by weight or less, yet still more preferably 15 parts by weight or less, most preferably 5 parts by weight or less, per 100 parts by weight of the polyolefin polymer. The amount of the additives is preferably 40 parts by weight or less, more preferably 30 parts by weight or less, most preferably 0.001 to 15 parts by weight, per 100 parts by weight of the polyolefin polymer.

The coat may be formed from a polymer composition comprising the polyolefin polymer and the same crystalline polyolefin resin as that used in the core. The use of the polymer composition has a merit that the adhesion between the core and the coat may be improved.

The amount of the crystalline polyolefin resin in the polymer composition is generally 1 to 100 parts by weight, preferably 2 to 80 parts by weight, more preferably 5 to 50 parts by weight, per 100 parts by weight of the polyolefin polymer. When the amount of the crystalline polyolefin resin in the polymer composition is excessively large, the crystalline thermoplastic resin tends to form a matrix or sea. In such a case, the fusion-bonding between the expanded beads does not proceed efficiently unless a high molding temperature is used. A high molding temperature results in a need to increase the cooling time of the foam moldings.

As the polyolefin polymer constituting the coat, a high pressure low density polyethylene resin or a linear low density polyethylene resin is particularly preferably used. An example of suitable linear low density polyethylene resin is a linear low density polyethylene resin obtained using a metallocene polymerization catalyst (this polyethylene resin will be referred to as MeLLDPE).

It is particularly preferred that the core in an expanded state comprise a polypropylene resin having a melting point of 120 to 165°C and that the coat comprise a polyethylene polymer having a melting point of 125°C or less, preferably 90 to 125°C, more preferably 95 to 120°C, with the proviso that the melting point of the polyethylene polymer is lower by at least 15°C than that of the polypropylene resin. In this case, the polyethylene polymer constituting the coat is preferably MeLLDPE. Though polyethylene polymers are generally not easily heat-bonded to polypropylene resins, MeLLDPE shows good heat-bonding property relative to polypropylene resins. Thus, the use of MeLLDPE is advantageous because the core and the coat are hardly separated from each other during the expansion of the composite resin particles or pellets for the production of expanded beads. The use of MeLLDPE gives an additional merit that the expanded beads are hardly adhered to each other (blocking) during the production thereof. It is inferred that such a merit is ascribed to the fact that MeLLDPE has a sharp molecular weight distribution and is free or almost free of low molecular weight components. The density of MeLLDPE is generally in the range of 0.890 to 0.935 g/cm$^3$, preferably 0.898 to 0.920 g/cm$^3$.

The above-mentioned polypropylene resin having a melting point of 120 to 165°C and constituting the core is preferably a propylene homopolymer or a polypropylene copolymer having a propylene structural unit content of 100 to 85 mole % and a co-monomer structural unit content of 0 to 15 mole %, wherein the co-monomer is at least one of ethylene and α-olefins having 4 to 20 carbon atoms. More preferably, the polypropylene resin is a polypropylene copolymer having a propylene structural unit content of 85 to 98 mole % and a co-monomer structural unit content of 2 to 15 mole %, wherein the co-monomer is at least one of ethylene and α-olefins having 4 to 20 carbon atoms for reasons of good mechanical properties and expansion property. Examples of the α-olefins include 1-butene, 1-pentene, 1-hexene, 1-octene and 4-methyl-1-butene. When the proportion of the co-monomer structural units exceeds 15 mole %, mechanical strengths such as bending strength and tensile strength of the polypropylene resin of the core tend to be lowered and, therefore, the resulting foam moldings have reduced mechanical strengths. A co-monomer content of 2 mole % or more gives improved expansion efficiency as compared with that attained by a co-monomer content of less than 2 mole % and, therefore, permits the use of a lower molding temperature.

It is also preferred that the above-mentioned polypropylene resin have a proportion of position irregular units based on 2,1-insertion to all propylene insertions of 0.5 to 2.0 % and a proportion of position irregular units based on 1,3-insertion to all propylene insertions of 0.005 to 0.4 %, which proportions are determined by $^{13}$C-NMR spectrum.

When the polypropylene resin have a proportion of position irregular units based on 2,1-insertion of less than 0.5 % or a proportion of position irregular units based on 1,3-insertion of less than 0.005 % , in-mold foam moldings obtained using expanded beads each having a core containing the polypropylene resin has a reduced compression set. When the proportion of position irregular units based on 2,1-insertion is 2.0 % or more or when the proportion of position irregular units based on 1,3-insertion is 0.4 % or more, on the other hand, a reduction in mechanical strengths such as in bending strength and tensile strength, of the polypropylene resin is so small that the expanded beads and foam moldings obtained therefrom have satisfactory mechanical strengths.

The position irregular units based on 2,1-insertion and 1,3-insertion contained in the polypropylene resin have a function to decrease the crystallinity thereof. In particular, these position irregular units have a function to reduce the melting point thereof and to reduce the degree of crystallinity thereof. Because of these functions, resin particles formed of the polypropylene resin show improved foaming and expanding efficiency and, at the same time, foam moldings obtained has a reduced compression set. Therefore, the foam moldings obtained by molding the expanded beads each having a core comprising the above polypropylene resin with specific position irregular units has a small compression set.

Too high a position irregular unit proportion, however, results in a lowering of melting point and degree of crystallinity of the polypropylene resin. Therefore, the expanded beads obtained using the polypropylene resin tend to contain excessively large cells, which will adversely affect the appearance of foam moldings obtained therefrom.

As used herein, the propylene structural unit content, the co-monomer (ethylene and/or α-olefins having 4 to 20 carbon atoms) structural unit content, the position irregular unit proportions (percentages) and hereinafter described isotactic triad fraction in the polypropylene resin are a measured by $^{13}$C-NMR spectroscopy.

The $^{13}$C-NMR spectrum may be measured, for example, as follows.

A sample in an amount of 350 to 500 mg is placed in a sample tube for NMR having a diameter of 10 mm and is completely dissolved in about 2.0 ml of o-dichlorobenzene as a solvent, while using about 0.5 ml of benzene deuteride as a locking solvent. The sample is then subjected to measurement at 130°C by a proton complete decoupling method. The measurement conditions involve a flip angle of 65 degrees and a pulse interval of 5T1 or more (T1 represents the longest value in the spin lattice relaxation time of methyl group). In a polypropylene resin, the spin lattice relaxation time of a methylene group and a methine group is shorter than that of a methyl group. Thus, under these

measurement conditions, the recovery of magnetization of all carbon atoms are 99 % or more. The detection sensitivity for position irregular units by $^{13}C$-NMR spectroscopy is generally 0.01 %. The sensitivity may be improved by increasing the integration number.

Regarding the chemical shift in the above measurement, the chemical shift of the peak based on methyl group at the third unit in 5 chains of propylene unit, which are formed by head-to-tail bond and in which the direction of methyl branch is the same, is determined to be 21.8 ppm. With this peak as a reference, the chemical shift of other carbon peaks are determined. With this reference, the peak based on the second unit in the 3 chains of the propylene units (represented by PPP[mm] in the structural formula shown below) appears at a chemical shift of 21.3 to 22.2 ppm, the peak based on the second unit in the 3 chains of the propylene units (represented by PPP[mr] in the structural formula shown below) appears at a chemical shift of 20.5 to 21.3 ppm, and the peak based on the second unit in the 3 chains of the propylene units (represented by PPP[rr] in the structural formula shown below) appears at a chemical shift of 19.7 to 20.5 ppm.

The propylene units PPP[mm], PPP[mr] and PPP[rr] represent as follows.

PPP[mm]: 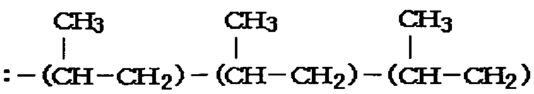

PPP[mr]: 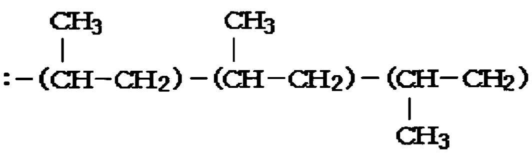

PPP[rr]: 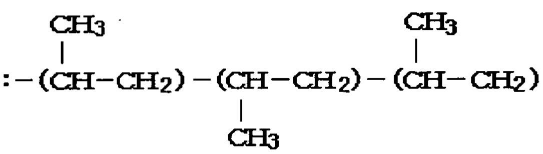

The polypropylene resin having position irregular units based on 2,1-insertion and 1,3-insertion is a polypropylene resin containing the following partial structures (I) and (II) in specific amounts.

Structure (I)

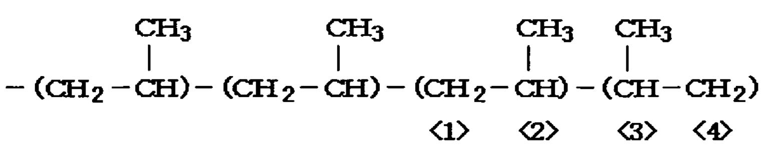

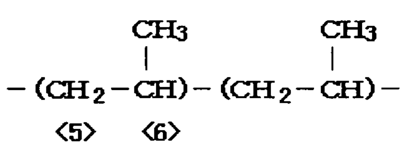

Structure (II)

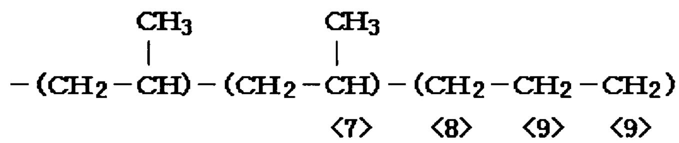

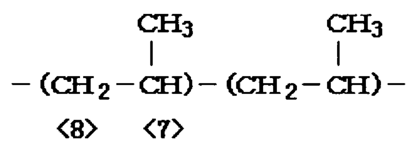

The above partial structures are considered to be formed due to positional regularity created during the polymerization of propylene using a metallocene polymerization catalyst. Namely, the propylene monomer generally reacts through 1,2-insertion where the methylene side thereof is bonded to a metal component of the catalyst. On rare occasions, however, the propylene monomer undergoes 2,1-insertion and 1,3-insertion. The 2,1-insertion is a reaction mode in which the direction of addition is reverse to that in the 1,2-insertion and which results in the formation of the irregular unit represented by the partial structure (I) in the polymer chain. In the case of the 1,3-insertion, the propylene monomer is inserted in the polymer chain at the C-1 and C-3 thereof to form the linear unit represented by the above partial structure (II).

The polypropylene resin having the above specific position irregular unit proportions may be obtained by using a suitably selected catalyst such as a metallocene polymerization catalyst having a hydroazulenyl group as a ligand thereof. The metallocene polymerization catalyst comprises a transition metal compound having a metallocene structure and a co-catalyst or activator. The position irregular unit proportions vary with the chemical structure of the metal complex component of the catalyst but generally increase with the increase of the polymerization temperature. A polymerization temperature of 0 to 80° C may be suitably used for the purpose of adjusting the position irregular unit proportions to the specific ranges.

The metal complex component as such may be used as the catalytic component. Alternatively, the metal complex component may be supported on granules or fine particulates of an inorganic or organic solid carrier to form a solid catalyst. In this case, the amount of the metal complex component is generally 0.001 to 10 mm mole, preferably 0.001 to 5 mm mole, per 1 g of the carrier.

Among various metallocene polymerization catalysts having a hydroazulenyl group as a ligand, catalysts containing titanium, zirconium or hafnium are preferably used. Above all, a zirconium complex is particularly preferable for reasons of high polymerization activity.

Particularly, the use of dimethylsilylenebis{1,1'-(2-methyl-4-phenyldihydroazulenyl)}zirconium dichloride or dimethylsilylenebis{1,1'-(2-ethyl-4-phenyldihydroazulenyl)}zirconium dichloride is preferred for reasons of easiness in controlling the position irregular unit proportions and in obtaining a polypropylene resin having an isotactic triad fraction of at least 97 %.

Example of the co-catalyst used together the above metal complex components include aluminoxanes such as methyl aluminoxane, isobutyl aluminoxane and methylisobutyl aluminoxane; Lewis acids such as triphenylborane, tris(pentafluorophenyl)borane and magnesium chloride; and ionic compounds such as dimethylanilinium tetrakis(pentafluorophenyl)borate. The cocatalyst may be used together with a trialkyl aluminum such as trimethyl aluminum, triethyl aluminum or triisobutyl aluminum.

The isotactic triad fraction in the polymer chains of the polypropylene resin is represented by the formula shown below. In the partial structure (II), one methyl group derived from the propylene monomer is missing as a result of the 1,3-insertion.

$$\text{mm (\%)} = \frac{S - 3 \times (P/6)}{\Sigma ICH_3 - 4 \times (P/6) - Q/3}$$

wherein
mm represents the isotactic triad fraction,
$\Sigma ICH_3$ represents a sum of peak areas (integrated intensity of peaks) of all methyl groups (all peaks appearing in the chemical shift range of 19 to 22 ppm),S represents a peak area of the methyl group appearing in the chemical shift range of 21.1 to 21.8 ppm,P represents A<1> + A<2> + A<3> + A<4> + A<5> + A<6>, and Q represents A<7> + A<8> + A<9> where A<1>, A<2>, A<3>, A<4>, A<5>, A<6>, A<7>, A<8> and A<9> represent the areas of peaks at 42.3 ppm, 35.9 ppm, 38.6 ppm, 30.6 ppm, 36.0 ppm, 31.5 ppm, 31.0 ppm, 37.2 ppm and 27.4 ppm, respectively, and represent proportions of the carbons indicated by <1> through <9> in the partial structures (I) and (II) shown above.

As used herein, the proportions of 2,1-inserted propylene and 1,3-inserted propylene relative to all propylene insertions are as calculated according to the following formulas:

$$\text{Proportion of 2,1-insertion (\%)} = \frac{(P/6) \times 1000 \times 1/5}{\Sigma I(27\text{-}48)}$$

$$\text{Proportion of 1,3-insertion (\%)} = \frac{(Q/6) \times 1000 \times 1/5}{\Sigma I(27\text{-}48)}$$

wherein ΣI(27-48) represents a sum of integrated intensity of signals appearing in the chemical shift range of 27 ppm to 48 ppm, and P and Q are as defined above in connection with the isotactic triad fraction.

It is also preferred that the polypropylene resin satisfy a relationship between its melting point Tm (°C) and its water vapor permeability Y ($g/m^2/24hr$) as follows:

$$(-0.20)\times Tm + 35 \leq Y \leq (-0.33)\times Tm + 60$$

The water vapor permeability Y is that of a film of the polypropylene resin and measured according to JIS K 7129(1992) "testing methods for water vapor transmission rate of plastic film and sheet". The test is performed at a temperature of 40±0.5°C and a relative humidity of 90±2 % using an IR sensor.

A polypropylene resin satisfying the above relationship exhibits suitable water vapor permeability. Thus, when expanded beads having the core comprising such a polypropylene resin are molded, penetration of steam in the beads (cores) is facilitated to improve the secondary expansion property of the beads. Thus, it becomes easy to produce foam moldings free of or almost free of gaps between the expanded beads.

Expanded beads are generally prepared by a method in which resin particles or pellets dispersed in water are impregnated with a blowing agent, the resulting dispersion in a higher pressure state being then discharged into a lower pressure atmosphere to expand the resin particles. In this case, the proper water vapor permeability facilitates the penetration of water and the blowing agent into the resin particles. As a result, the water and blowing agent can be uniformly dispersed in the resin particles so that the cell diameter of the resulting expanded beads becomes uniform and the expansion ratio thereof is improved. Thus, the foam molding obtained from the expanded beads shows satisfactory compressive strength and is low in compression set.

The correlation between the water vapor permeability Y and the melting point Tm may be perhaps ascribed to the fact that the expansion temperature for the production of expanded beads and the temperature of the saturated steam for the production of foam moldings are generally proportional to the melting point Tm. The polypropylene resin which satisfy the above-described relationship between the vapor permeability Y is correlated with the melting point Tm may be obtained by suitably selecting the metallocene polymerization catalyst for the production thereof. In particular, the use of a crosslinking-type bis{1,1'-(4-hydroazulenyl)}zirconium dichloride as the metal complex component can suitably produce the desired polypropylene resin.

It is also preferred that the polypropylene resin used for the formation of the core have an isotactic triad fraction (mm fraction) in the head-tail bonded triad propylene chains, as determined by $^{13}C$-NMR spectroscopy, of at least 97 %, more preferably at least 98 %, for reasons of improved mechanical properties of the polypropylene resin and, therefore, of foam moldings obtained from expanded beads having the cores formed of the polypropylene resin.

It is further preferred that the polypropylene resin used for the formation of the core have a melt flow rate (MFR) of 0.5 to 100 g/10 min., more preferably 1.0 to 50 g/10 min., most preferably 1.0 to 30 g/10 min., for reasons of improved industrial production efficiency for expanded beads and of improved mechanical properties of foam moldings obtained therefrom.

As used herein, MFR is intended to refer to melt mass flow rate measured under the conditions described in JIS K 6921-2(1997), Table 3.

The expanded beads used in the present invention may be prepared by foaming and expanding composite resin particles or pellets having the above-described core-coat structure.

The composite resin particles may be suitably prepared using a co-extrusion die, disclosed in, for example, Japanese Examined Patent Publications No.S41-16125, No.S43-23858 and No.S44-29522 and Japanese Unexamined Patent Publication No.S60-185816, and two extruders. A crystalline thermoplastic resin for the formation of the core is melted and kneaded in one extruder, while a polyolefin polymer for the formation of the coat is melted and kneaded in the other extruder. The melted resins in the extruders are fed to the co-extrusion die, combined therein and then co-extruded therefrom in the form of a strand having a core-sheath structure in which a core of the crystalline thermoplastic resin in an unexpanded state is surrounded by a coat of the polyolefin polymer in an unexpanded state. The strand is subsequently severed with a cutter and its associated take-up rollers for running the strand at a desired speed to obtain the resin particles each having a desired size or weight and each composed of unexpanded core and coat.

It is preferred that the thickness of the coat of the resin particles be as thin as possible since pores or cells are hardly formed in the coat when the resin particles are foamed and expanded. However, too thin a thickness of the coat is undesirable because the core is not sufficiently covered with the coat. When the thickness of the coat of the resin particles is excessively thick, on the other hand, the expansion of the resin particles results in the formation of cells in the coat, which may cause deterioration of the mechanical properties of the final foam coatings. Therefore, the thickness of the coat of the resin particles in the non-expanded state is preferably 5 to 500 μm, more preferably 10 to 100 μm. The thickness of the coat of the expanded beads is preferably 0.1 to 200 μm, more preferably 0.5 to 60 μm.

The coat of the expanded beads is in substantially unexpanded state.

As used herein, the term "substantially unexpanded state" is intended to refer not only to a state in which cells are not present at all (including a state in which cells once formed disappear due to melting and breakage) but also to a state in which very fine cells are present in a small amount. Such fine cells, which may have an open cellular structure or a closed cellular structure, preferably have a maximum length of 10 μm or less. The cell size may be determined by microscopic observation of a cross-section of the coat and the "maximum length" is the longest straight line extending between two points on the periphery of the given cell. The amount (number) of the very fine cells having a maximum diameter of 10 μm or less is preferably at most 3, more preferably at most 2, per 500 $\mu m^2$ of a sectional area of the coat.

In the above co-extrusion process, it is possible to incorporate a blowing agent in the melt of the crystalline thermoplastic resin for the formation of the core, if desired. When such a melt is fed to the co-extrusion die and co-extruded with the melt of the polyolefin polymer through the die, the strand has a core-sheath structure in which the core in an expanded state is covered with the coat in an unexpanded state.

The average weight of one resin particle is 0.1 to 20 mg, preferably 0.2 to 10 mg. The resin particles are preferably small in variation of the weight thereof, since it is easy to produce expanded beads therefrom and since the expanded beads obtained have also small variation in density of the expanded beads and can be efficiently filled in a mold cavity.

The resin particles are then foamed and expanded preferably by a method in which a physical blowing agent is impregnated in the resin particles as disclosed in Japanese Examined Patent Publications No.S49-2183 and No. S56-1344 and German Publications No.1,285,722A and No. 2,107,683A. The physical blowing agent may be an inorganic physical blowing agent such as nitrogen, air or carbon dioxide or an organic physical blowing agent such as an aliphatic hydrocarbon, e.g. butane, pentane, hexane or heptane or a halogenated hydrocarbon, e.g. trichlorofluoromethane, dichlorodifluoromethane, tetrachlorodifluoroethane, or dichloromethane. These blowing agents may be used singly or in the form of a mixture of two or more thereof.

One preferred method for producing expanded beads using the physical blowing agent includes charging the composite resin particles together with a dispersing medium and the blowing agent in an autoclave provided with a discharging port to obtain a dispersion. The dispersion is then heated to a temperature higher than the softening point of the base thermoplastic resin of the core of the resin particles to impregnate the resin particles with the blowing agent. The resulting dispersion is discharged from the autoclave through the discharging port into a lower pressure atmosphere to foam and expand the resin particles. The thus obtained expanded beads are then dried.

The dispersing medium is preferably water, an alcohol or an aqueous medium containing an alcohol. For the purpose of uniformly dispersing the composite resin particles in the dispersing medium, a dispersing agent such as an inorganic substance sparingly soluble in water, e.g. aluminum oxide, tricalcium phosphate, magnesium pyrophosphate, zinc oxide or kaolin; a water-soluble protective colloid, e.g. polyvinyl pyrrolidone, polyvinyl alcohol or methyl cellulose; or an anionic surfactant, e.g. sodium dodecylbenzenesulfonate or sodium alkanesulfonate may be added to the dispersing medium. These dispersing agents may be used singly or as a mixture of two or more thereof.

When the dispersion is discharged into a low pressure atmosphere, it is preferred that a pressurized gas, which may be the same as the physical blowing agent used, be fed to the autoclave to keep the pressure within the autoclave constant for reasons that the resin particles can be easily discharged from the autoclave.

The expanded beads used for forming foamed moldings according to the present invention preferably show two or more endothermic peaks in a DSC curve thereof obtained by the heat flux differential scanning calorimetric

analysis. The expanded beads showing two or more endothermic peaks in a DSC curve thereof have excellent secondary expansion properties and give foamed moldings having excellent mechanical strengths and appearance. Such expanded beads may be obtained by controlling the expansion conditions, such as temperature, pressure and time, under which the resin particles contained in the autoclave are heated therein and discharged therefrom, as described in, for example, Japanese Unexamined Patent Publication No.2002-200635.

Using the above-described composite expanded beads, a foam molding is continuously produced using an apparatus which comprises a pair of upper and lower endless belts continuously traveling along a pair of opposing upper and lower surfaces, respectively, within a passage defined by structural members and rectangular in section. The expanded beads are continuously fed between the pair of endless belts and then successively passed through a heating zone and a cooling zone within the passage.

It is preferred that the expanded beads be subjected to a compression treatment before being introduced to the heating zone. The compression may be suitably carried out by passing the expanded beads through a necked portion defined in the passage at a location upstream of the heating zone. The necked portion is preferably configured so that the bulk volume of the expanded beads in the necked portion is decreased to 10 to 60 %, preferably 15 to 50 %, of the bulk volume thereof before the passage through the necked portion. After the compression of the expanded beads has been partly released, the expanded beads are fed to the heating zone. It is preferred that the expanded beads have a volume recovery rate of 80 % or more, more preferably 85 % or more. The volume recovery rate VR is defined as follows:

$$VR\ (\%) = V_2/V_1 \times 100$$

wherein $V_1$ represents the bulk volume of the expanded beads before compression and $V_2$ represents the bulk volume of the expanded beads which have been compressed to 60 % of the bulk volume $V_1$, then released from the compression and thereafter allowed to stand for 10 seconds.

FIG. 1 depicts an apparatus which is suitably used for carrying out the continuous production of a foam molding. The apparatus has a pair of upper and lower structural members 7 and 8 having upper and lower surfaces, respectively. The upper and lower surfaces are disposed face to face and generally horizontal with each other. The apparatus also has a pair of left and right structural members (not shown) having a pair of left and right surfaces (not shown). The upper and lower surfaces and the left and right surfaces define a passage 9 having a generally rectangular cross-section. At least one of the upper and lower structural members 7 and 8 is moveable so that the distance between the upper and lower surfaces can be adjusted. The upper and lower structural members 7 and 8 serve to function as means for adjusting thickness of a foam molding to be produced. Similarly, the left and right structural members serve to function as means for adjusting the width of the foam molding. The passage 9 is provided with a necked portion defined by a pair of opposing projections 17 and 17.

Disposed within the passage 9 are a pair of upper and lower endless belts 2 and 4 continuously traveling along the opposing upper and lower surfaces of the upper and lower structural members 7 and 8, respectively. The upper endless belt 2 is supported by a pair of rolls 3a and 3b, while the lower endless belt 4 is supported by a pair of rolls 5a and 5b. The apparatus has a hopper 1 at an upstream end of the passage 9 from which the expanded beads are continuously fed to between the endless belts 2 and 4.

The upper and lower structural members 7 and 8 are provided with heaters and coolers so that the passage 9 has a heating zone and a cooling zone provided downstream of the heating zone. The heaters are formed by plural sets of upper and lower heating chambers (five sets of chambers in the illustrated embodiment) 11, 12, 13, 14 and 15, each of which is configured to feed or discharge a heating medium such as steam. In order to feed and withdraw steam into and from the passage 9, the upper and lower structural members 7 and 8 and upper and lower endless belts 2 and 4 are configured to permit steam to pass therethrough. Thus, for example, each of the upper and lower structural members 7 and 8 is provided with perforations. Each of the endless belts 2 and 4 is made of a stainless steel having a thickness of 0.2 to 1.0 mm and provided with perforations having a diameter in the range of 0.5 to 3.0 mm and arranged at an inter-peripheral distance of 3 to 50 mm. The coolers may be cooling plates 16 within which flow paths for a cooling medium such as water are formed.

Thus, the expanded beads 6 are fed from the hopper 1 between the upper and lower endless belts 2 and 4 and are successively transferred through the necked portion defined by the projections 17 and 17, the heating zone having the chambers 11-15 and cooling zone having the coolers 16. During the passage through the necked portion, the expanded beads 6 are compressed. The compression is partly released when the expanded beads exit from the necked portion. The expanded beads 6 are then heated and fuse-bonded together during their passage through the heating zone to form a foam molding 10. The molding 10 is cooled during its passage through the cooling zone and is discharged from the molding apparatus.

It is preferred that each of the upper chambers 11-15 and lower chambers 11-15 can be selectively connected

through a valve to a steam feed line or a steam withdrawing line (inclusive of evacuating line) for reasons that the apparatus becomes versatile and enables a variety of heating modes.

For example, the upper and lower chambers 11 and 11 which are located upstream end of the heating zone may be used to preheat the expanded beads, while the chambers 12 and 13 and the chambers 14 and 15 may be used as first and second heating zones, respectively. In the first heating zone, steam may be fed to the passage 9 from the upper chambers 12 and 13 with the lower chambers 12 and 13 being used for withdrawing steam from the passage 9. Similarly, in the second heating zone, the steam feed may be from upper chambers 14 and 15, while the steam withdrawal may be from the lower chambers 14 and 15. In this case, the direction of the steam flow is downward in each zone. If desired, however, the direction of the steam flow is upward in each zone. Alternatively, the direction of the steam flow in the first and second heating zones may be different from each other. Further, it is possible that the direction of the steam flow in the chambers 12 and 13 of the first heating zone differs from each other. Also, the direction of the steam flow in the chambers 14 and 15 in the second heating zone differs from each other. The withdrawal of steam in any desired chamber or chambers may be by free flowing or by evacuation (under a reduced pressure).

The preheating in the chambers 11 and 11 can improve the efficiency of heating the expanded beads. In this case, each of the lower and upper chambers 11 and 11 may be evacuated to facilitate the removal of air between the expanded beads and to ensure a stable flow of the expanded beads in the passage, while feeding steams from chambers 12 and 13. The removal of air is desirable because of improved fusion-bonding between expanded beads. Such evacuation may be additionally carried out in the chambers 15 and 15 of the second heating zone for the purpose of increasing the line speed.

In this case, when the direction of the steam flow in the chambers 12 is different from that in the chamber 13, the expanded beads in the passage 9 can be efficiently heated and low temperature steam can be used. When steam is fed from the upper and lower chambers 13 and one of the upper and lower chambers 12 while evacuating the other one of the upper and lower chambers 12, the amount of steam can be smaller than that in the embodiment described immediately above.

The number of the sets of upper and lower chambers is not specifically limited and is preferably 2 to 4 for reasons of operation and apparatus costs.

When the coat of the expanded beads contains a crystalline polyolefin polymer, the temperature of steam fed to the first and second heating zones is generally lower than the melting point MPc (°C) of the crystalline polyolefin resin constituting the core but not lower than the melting point MPs (°C) of the crystalline polyolefin polymer constituting the coat, though the suitable steam temperature varies depending upon the inside pressure and the bulk density of the expanded beads. Too low a steam temperature cannot sufficiently fusion-bonding the expanded beads together, while an excessively high steam temperature requires a long cooling time. The steam temperature is preferably from not less than (MPs + 1°C) and (MPc - 1°C), more preferably from not less than (MPs + 3°C) and (MPc - 3°C).

When the coat of the expanded beads contains a substantially non-crystalline polyolefin polymer, the temperature of steam fed to the first and second heating zones is generally lower than the melting point MPc (°C) of the crystalline polyolefin resin constituting the core but not lower than (VSPs + 10°C) where VSPs is a Vicat softening point (°C) of the substantially non-crystalline polyolefin polymer constituting the coat, though the suitable steam temperature varies depending upon the inside pressure and the bulk density of the expanded beads. The steam temperature is preferably from not less than (VSPs + 15°C) and (MPc - 1°C), more preferably from not less than (VSPs + 20°C) and (MPc - 3°C).

Depending upon the kind and apparent density of the crystalline thermoplastic resin from which the core of the expanded beads is formed, the thus obtained foam molding occasionally starts shrinking after having been taken out of the molding apparatus. In such a case, the foam molding as obtained may be aged in an atmosphere having a temperature of 50 to 85°C. By such an aging treatment, the foam molding can recover substantially the same size as its original dimension.

The expanded beads used for the production of foam moldings generally have a bulk density of 8 to 450 g/L, preferably 10 to 300 g/L, most preferably 12 to 30 g/L. As used herein, the bulk density of the expanded beads is as measured by the following method. Expanded beads are arbitrarily sampled just before molding and placed in a chamber maintained at 23°C and 50 % relative humidity in the atmospheric pressure. The beads are fed, while removing static electricity thereof, to a 1 liter graduation cylinder until the upper level of the beads in the cylinder arrives at the graduation of 1 liter. The beads in the cylinder are then weighed to determine the bulk density.

The expanded beads are preferably pretreated to increase the pressure inside the cells thereof to 0.03 to 0.35 MPa(G) before start of the molding, since it is easy to obtain foam moldings having a desired expansion ratio, good adhesion-bonding between the expanded beads, small gaps between the expanded beads and good efficiency to be cooled. When the inside pressure is small, it is necessary to compress the expanded beads before molding in order to obtain foam moldings having small gaps between the expanded beads. When the expanded beads are compressed, it is difficult to obtain a foam molding having a large expansion ratio. Too high an inside pressure of the expanded beads may cause a reduction of the cooling efficiency in the cooling zone of the molding apparatus. Thus,

it is necessary to use a long cooling time in order to prevent abnormal inflation of the foam molding.

The above-mentioned treatment of the expanded beads to increase the pressure inside of the cells thereof may be carried out by allowing the expanded beads to stand for a suitable period of time in a closed vessel to which a pressurized gas has been fed, so that the pressure inside the cells thereof exceeds the atmospheric pressure. Any gas containing an inorganic gas as a major ingredient may be used for the pressure increasing treatment as long as it is in the form of gas under conditions where the expanded beads are treated. Examples of the inorganic gas include nitrogen, oxygen, air, carbon dioxide and argon. Nitrogen or air is suitably used for reasons of costs and freedom of environmental problems.

One specific method of increasing the inside pressure of the cells using air and a method of measuring the thus increased inside pressure P (MPa(G)) in the cells are disclosed in Japanese Unexamined Patent Publication No. 2003-201361.

Thus, expanded beads are placed in a closed vessel into which pressurized air is fed. The beads are allowed to stand in the vessel for a certain period of time while maintaining the pressure inside the vessel at 0.98 to 9.8 MPa (G) so that air penetrates through the cell walls and the inside pressure of the cells increases. The thus treated expanded beads are placed in the hopper 1 of the molding apparatus. The inside pressure of the cells P (MPa(G)) is measured in the following manner.

A group of expanded beads whose inside pressure has been increased are taken out of the closed vessel and packed in a polyethylene film bag having a size of 70 mm × 100 mm and provided with a multiplicity of pin holes each having a size preventing the passage of the beads but allowing free passage of air. The beads in the bag are transferred to a temperature-controlled room maintained at 23°C and 50 % relative humidity under ambient pressure. The weight Q (g) of the beads is measured with a weighing device in the temperature-controlled room. The expanded beads are then allowed to stand for 48 hours in the room. The weight of the expanded beads U (g) is measured again after the lapse of the 48 hours period. Then, all expanded beads are immediately taken out of the bag to measure the weight Z (g) of the bag by itself. The balance between the weights Q (g) and U (g) represents the amount of gas increased W (g). The inside pressure P MPa(G) of the expanded beads may be calculated from the formula below:

$$P = (W/M) \times R \times T/V$$

wherein M is the molecular weight of air, R is the gas constant, T represents an absolute temperature (296K), and V represents a volume (L) obtained by subtracting the volume of the base resin of the beads from the apparent volume of the group of the expanded beads.

The apparent volume of the group of the expanded beads is measured as follows. The expanded beads which have been taken out of the bag after the lapse of the 48 hours period are immersed in 100 $cm^3$ of water at 23° C contained in a graduated measuring cylinder in the temperature-controlled room. From the volume increment, apparent volume Y ($cm^3$) of the beads is read. This volume is converted to a volume in terms of (L). The apparent expansion ratio of the group of the expanded beads is obtained by dividing the density of the base resin (g/$cm^3$) by the apparent density (g/$cm^3$) of the group of the expanded beads. The apparent density (g/$cm^3$) of the group of the expanded beads is obtained by dividing the above-described weight of the group of the expanded beads (difference between U (g) and Z (g)) by the volume Y ($cm^3$). As the group of the expanded beads, a plural number of the expanded beads are sampled such that the weight of the group of the expanded beads (difference between U (g) and Z (g)) is within the range of 0.5000 to 10.0000 g and the volume Y is within the range of 50 to 90 $cm^3$.

The foam molding produced by the process according to the present invention generally has an apparent density of 10 g/L to 450 g/L, preferably 10 to 300 g/L, more preferably 10 g/L to 28 g/L. The foam molding has generally a thickness of 1 to 20 cm and a width of 10 to 150 cm, preferably a thickness of 3 to 10 cm and a thickness of 20 to 100 cm. The foam molding having an apparent density of 10 g/L to 28 g/L may be suitably used as cushioning packaging materials. The term "apparent density of the foam molding" as used herein is intended to refer to the apparent whole density as defined in JIS K 7222(1999).

The following examples and comparative examples will further illustrate the present invention.

<u>Production of Polypropylene Resins:</u>

Preparation Example 1

(i) Synthesis of dimethylsilylenebis{1,1'-(2-methyl-4-phenyl-4-hydroazulenyl)}zirconium dichloride

The following reactions were performed in an inert gas atmosphere and the solvents used in the following reactions had been previously dried and refined.

(a) Synthesis of racemic-meso mixture

In 30 mL of hexane were dissolved 2.22 g of 2-methylazulene prepared in accordance with the method disclosed in Japanese Unexamined Patent Publication No. S62-207232, to which 15.6 mL (1.0 equivalent) of a solution of phenyl lithium in a cyclohexane-diethyl ether mixed solvent were added little by little at 0°C. The resulting solution was stirred at room temperature for 1 hour and then cooled to -78°C, to which 30 mL of tetrahydrofuran were added.

To the resulting solution 0.95 mL of dimethyldichlorosilane was added. The mixture was raised to room temperature and then reacted at 50°C for 90 minutes. Thereafter, an aqueous saturated ammonium chloride solution was added to the reaction mixture, from which an organic phase was separated and then dried over anhydrous sodium sulfate. The solvent was then removed by vacuum distillation.

The crude product thus obtained was purified by silica gel column chromatography (developing solvent: hexane/dichloromethane (=5/1)) to obtain 1.48 g of bis{1,1'-(2-methyl-4-phenyl-4-dihydroazulenyl)}-dimethylsilane.

In 15 mL of diethyl ether, 786 mg of the thus obtained bis{1,1'-(2-methyl-4-phenyl-4-dihydroazulenyl)}dimethylsilane were dissolved, to which 1.98 mL of a solution of n-butyl lithium in hexane (1.68 mol/L) were added dropwise at -78°C. The temperature was gradually raised to room temperature and the mixture was stirred for 12 hours at room temperature. The solvent was then removed by distillation and the solids thus obtained were washed with hexane and dried under vacuum.

The thus obtained solids were added to 20 mL of a toluene/diethyl ether (=40/1 weight ratio) mixed solvent, to which 325 mg of zirconium tetrachloride were added at - 60°C. The mixture was gradually returned to room temperature and thereafter stirred at room temperature for 15 minutes to obtain a solution. The solution was concentrated under reduced pressure, to which hexane was added to precipitate a racemic-meso mixture (150 mg) of dimethylsilylenebis{1,1'-(2-methyl-4-phenyl-4-hydroazulenyl)}zirconium dichloride.

(b) Separation of racemic body

The racemic-meso mixture (887 mg) obtained by repeating the above synthesis (a) was placed in a glass vessel and dissolved in 30 mL of dichloromethane. The solution was irradiated with a high pressure mercury lamp for 30 minutes. The dichloromethane was then removed by vacuum distillation to obtain yellow solids. Toluene (7 mL) was added to the solids and the mixture was stirred and then allowed to quiescently stand to precipitate yellow solids. After the removal of the supernatant, the solids were dried under vacuum to obtain 437 mg of a racemic body of dimethylsilylenebis{1,1'-(2-methyl-4-phenyl-4-hydroazulenyl)}zirconium dichloride.

(ii) Synthesis of a metallocene polymerization catalyst

(a) Treatment of catalyst carrier

Magnesium sulfate (16 g) was placed in a glass vessel together with 135 mL of desalted water and the mixture was stirred to obtain a solution. Next, 22.2 g of montmorillonite (KUNIPIA F (trade name) manufactured by KUNIMINE INDUSTRIES CO., LTD.) were added to the solution and the mixture was heated to 80°C and maintained at that temperature for 1 hour. Thereafter, the resulting mixture was mixed with 300 mL of desalted water and solids were separated by filtration. The solids were mixed with 46 mL of desalted water, 23.4 g of sulfuric acid and 29.2 g of magnesium sulfate. The mixture was then heated and refluxed for 2 hours. The reaction mixture was dispersed in 200 mL of desalted water and then filtered. The solids were further washed twice by being dispersed with 400 mL of desalted water and filtration. The washed solids were dried at 100°C to obtain chemically treated montmorillonite as a catalyst carrier.

(b) Preparation of catalyst component

To an autoclave having an inside volume of 1 L and equipped with a stirrer was fed propylene for thoroughly substituting the inside atmosphere therewith. Then 230 mL of dehydrated heptane was fed to the autoclave and the temperature inside the autoclave was maintained at 40°C. The chemically treated montmorillonite obtained above (10 g) as a catalyst carrier was suspended in 200 mL of toluene and the suspension was added to the above autoclave.

The racemic body of dimethylsilylenebis{1,1'-(2-methyl-4-phenyl-4-hydroazulenyl)}zirconium dichloride (0.15 mm mole) prepared in (i)(b) above and triisobutylaluminum (3 mm mole) were mixed in toluene to obtain a mixture (20 mL). The mixture was then added to the above autoclave.

Next, propylene was fed to the autoclave at a rate of 10 g/hr for 120 minutes. The reaction mixture in the autoclave was further reacted for another 120 minutes. Thereafter, the solvent was removed by distillation under a nitrogen atmosphere till dryness to obtain a solid catalyst component. The solid catalyst component was found to

contain 1.9 g of polypropylene per 1 g of a total amount of the chemically treated montmorillonite (carrier), the racemic body of dimethylsilylenebis{1,1'-(2-methyl-4-phenyl-4-hydroazulenyl)}zirconium dichloride and triisobutylaluminum supported on the carrier.

(iii) Preparation of propylene resin

To an autoclave having an inside volume of 200 L and equipped with a stirrer was fed propylene for thoroughly substituting the inside atmosphere therewith. Then, 60 L of purified n-heptane and 500 mL of a solution of triisobutylaluminum (0.12 mole) in hexane were charged in the autoclave and the temperature inside the autoclave was raised to 70°C. Next, 9.0 g of the above solid catalyst component were added to the autoclave, into which a mixed gas containing propylene and ethylene (having a propylene/ethylene weight ratio of 97.5:2.5) was introduced such that the pressure of 0.7 MPa(G) was reached, thereby to start the polymerization to proceed. The polymerization reaction was carried out for 3 hours at 70°C under the above conditions.
Thereafter, 100 mL of ethanol was added to the reaction system under a pressure to stop the reaction. The remaining gas components were purged to obtain 9.3 kg of a polypropylene resin (propylene-ethylene random copolymer) having MFR of 8 g/10 min., a propylene structural unit content of 97.6 mole %, an ethylene structural unit content of 2.4 mole %, an isotactic triad fraction of 99.2 %, a melting point Tm of 141°C, a proportion of position irregular units attributed to 2,1-insertion of 1.06 % and a proportion of position irregular units attributed to 1,3-insertion of 0.17 %. The polypropylene resin will be hereinafter referred to as Polymer 1.

Preparation Example 2

To an autoclave having an inside volume of 200 L and equipped with a stirrer was fed propylene for thoroughly substituting the inside atmosphere therewith. Then, 60 L of purified n-heptane and 500 mL of a solution of triisobutylaluminum (0.12 mole) in hexane were charged in the autoclave and the temperature inside the autoclave was raised to 70°C. Next, 6.0 g of the same solid catalyst component as used in Preparation Example 1 were added to the autoclave, into which a mixed gas containing propylene and ethylene (having a propylene/ethylene weight ratio of 96.5:3.5) was introduced such that the pressure of 0.7 MPa(Ge) was reached, thereby to start the polymerization reaction to proceed. The polymerization reaction was carried out for 3 hours at 70°C under the above conditions.
Thereafter, 100 mL of ethanol was added to the reaction system under a pressure to stop the reaction. The remaining gas components were purged to obtain 8.8 kg of a polypropylene resin (propylene-ethylene random copolymer) having MFR of 8 g/10 min., a propylene structural unit content of 95.3 mole %, an ethylene structural content of 4.7 mole %, an isotactic triad fraction of 99.2 %, a melting point Tm of 125°C, a proportion of position irregular units attributed to 2,1-insertion of 0.95 % and a proportion of position irregular units attributed to 1,3-insertion of 0.11 %. The polypropylene resin will be hereinafter referred to as Polymer 2.

Polypropylene Resins Produced Using Ziegler Catalyst:

A propylene-butene-1 random copolymer (NOVATEC PP MB3B (trade name) manufactured by Japan Polychem Corporation) prepared using a Ziegler catalyst was provided. This propylene resin will be hereinafter referred to as Polymer 3. Also provided was a propylene-ethylene random copolymer (J532MZV (trade name) manufactured by Idemitsu Petrochemical Co., Ltd.). This propylene resin will be hereinafter referred to as Polymer 4.
Properties of Polymers 1 to 4 are summarized in Table 1.

Table 1

| Polypropylene Resin | | Polymer 1 | Polymer 2 | Polymer 3 | Polymer 4 |
|---|---|---|---|---|---|
| Composition of Polymer | Propylene (mole %) | 97.6 | 95.3 | 94.0 | 97.2 |
| | Ethylene (mole %) | 2.4 | 4.7 | 0 | 2.8 |
| | Butene-1 (mole %) | 0 | 0 | 6.0 | 0 |
| Proportion of Position Irregular Units | 2,1-Insertion | 1.06 | 0.95 | 0 | 0 |
| | 1,3-Insertion | 0.17 | 0.11 | 0 | 0 |
| Melting Point Tm (°C) | | 141 | 125 | 148 | 143 |
| Water Vapor Permeability ($g/m^2/24hr$) | | 12.0 | 16.8 | 11.9 | 15.8 |

Table 1 (continued)

| Polypropylene Resin | Polymer 1 | Polymer 2 | Polymer 3 | Polymer 4 |
|---|---|---|---|---|
| [mm] fraction (%) | 99.2 | 99.2 | 96.5 | 96.4 |
| MFR (g/10 min) | 8 | 8 | 8 | 6 |

Preparation of Expanded Beads and Foam Moldings:

In Examples and Comparative Examples shown below, expanded beads were prepared using Polymers 1 to 4 obtained above and foam moldings were prepared using the expanded beads. In these examples, the melting point is measured using a heat flux differential scanning calorimeter (DSC-50 (trade name) manufactured by Shimadzu Corporation) in a manner as described above. Water vapor permeability is measured in a manner as described above for films of 25 µm thick prepared from Polymers 1 to 4.

Example 1

Polymer 1 obtained in Preparation Example 1 and an antioxidant (0.05 % by weight of YOSHINOX BHT (trade name) manufactured by Yoshitomi Pharmaceutical Co., Ltd.) and 0.10 % by weight of IRGANOX 1010 (trade name) manufactured by Ciba-Geigy Corporation) were kneaded at 230°C in a single-screw extruder having an inside diameter of 65 mm and the kneaded mixture was fed to a core nozzle of a co-extrusion die at a pressure of 14.7 MPa(G) so that an extrusion rate of 46 kg/hr was obtained.

On the other hand, a linear low density polyethylene polymerized using a metallocene polymerization catalyst (KERNEL KF270 (trade name) manufactured by Japan Polychem Corporation) having a density of 0.907 g/cm$^3$ and a melting point of 100°C and an antioxidant (0.05 % by weight of YOSHINOX BHT (trade name) manufactured by Yoshitomi Pharmaceutical Co., Ltd.) and 0.10 % by weight of IRGANOX 1010 (trade name) manufactured by Ciba-Geigy Corporation) were kneaded at 220°C in a single-screw extruder having an inside diameter of 30 mm and the kneaded mixture was fed to the above co-extrusion die at a pressure of 12.7 MPa(G) so that an extrusion rate of 8 kg/hr was obtained.

Then, the kneaded mixtures were extruded from a die orifice having a diameter of 1.5 mm in the form of a strand having a core formed from the kneaded mixture of Polymer 1 and the antioxidant and a coat (or sheath) surrounding the core and formed from the kneaded mixture of the linear low density polyethylene and the antioxidant. The core and coat were each in an unexpanded state.

The strand was passed through a water-containing vessel and the cooled strand was cut to obtain composite resin particles having a weight of 1.0 mg per one particle. Observation by a phase-contrast microscope of the resin particles revealed that the core of the polypropylene resin in an unexpanded state was covered with the coat of the linear low density polyethylene having a thickness of 47 µm.

The thus obtained composite resin beads (1000 g) were charged in an autoclave having an inside volume of 5 liters together with 2500 g of water, 200 g of an aqueous dispersion containing 10 % by weight of tricalcium phosphate and 30 g of aqueous solution containing 2 % by weight of sodium dodecylbenzenesulfonate, to which isobutane was added in an amount shown in Table 2. The contents in the autoclave was then heated to an expansion temperature shown in Table 2 over a period of 60 minutes and maintained at that temperature for 30 minutes.

Thereafter, while feeding compressed nitrogen gas to the autoclave to maintain the pressure inside the autoclave at an expansion pressure shown in Table 2, a valve connected to a bottom of the autoclave was opened to discharge the contents in the autoclave into the atmosphere at ambient temperature, thereby obtaining expanded beads. The expanded beads after drying were found to have a bulk density of 18 g/L and an average cell diameter of 190 µm. The cells were very uniform in size.

The average cell diameter of the expanded beads are measured as follows. An expanded bead is arbitrarily selected and cut along a plane passing through near the center of the bead. The cut surface is observed by a microscope and the image is formed on a photograph or a display or projected on a screen. Diameters of arbitrarily selected 50 cells are measured. The arithmetic mean of the 50 measured diameters represent the average cell diameter.

Using the thus obtained expanded beads, a foam molding was next produced as follows.

First, the expanded beads obtained above were placed in a pressurized atmosphere at a temperature of 23°C and a gauge pressure of 2 MPa(G) to impregnate the beads with air and to increase the inside pressure of the beads. The expanded beads having an increased inside pressure as shown in Table 2 were used for molding.

Using a molding apparatus similar to that shown in FIG. 1, the expanded beads supplied from the hopper 1 were compressed during their passage through the necked portion defined between the projections 17 formed at a position upstream of the heating zone so that the bulk volume of the expanded beads in the necked portion 17 was 40

% of that before the passage through the necked portion. The compression of the expanded beads was then partly released after the passage through the necked portion so that the bulk volume thereof was 80 % of that before the passage through the necked portion.

The passage 9 had a constant width of 30 cm throughout the length thereof from the portion at which the expanded beads were supplied from the hopper 1 to the portion at which the foam molding was discharged from the cooling zone. The height of the passage 9 downstream of the necked portion was 5 cm. The length of the passage 9 between the centerline of the roll 3b and the necked portion 17 was 1.5 m, the length of the necked portion 17 was 20 cm, the length between the necked portion 17 and the upstream end of the cooling plates 16 was 2 m and the length of the cooling plates 16 was 6 m.

The conditions for the production of the expanded beads, properties of the expanded beads, molding conditions, properties of the foam molding and line speed are summarized in Table 2. In Table 2, the pressures in chambers 11-15 are those of the steam fed to respective chambers. The symbol "vac" means that the chamber was evacuated using a vacuum pump, while "none" means that neither steam feed nor evacuation was carried out. The pressure of steam shown in Table 2 represents the minimum pressure which gives satisfactory fusion-bonding between expanded beads but below which the fusion-bonding between the expanded beads becomes unsatisfactory. The line speed shown in Table 2 represents the maximum speed which gives a shrinkage of the foam molding of not greater than 1 % but above which the shrinkage of the foam molding exceed 1 %. The shrinkage of the foam molding is given as follows:

$$\text{Shrinkage (\%)} = (WD - WD')/WD \times 100$$

wherein WD is a width of a foam molding as discharged from the exit of the molding machine and WD' is a width of a foam molding obtained after aging the as discharged foam molding at 60°C for 24 hours in the ambient pressure and then at 23°C for another 24 hours in the ambient pressure. Examples 2 to 4

Using Polymer 2, Polymer 3 and Polymer 4 in place of Polymer 1, foam moldings were produced in the same manner as that in Example 1. The conditions for the production of the expanded beads, properties of the expanded beads, molding conditions and properties of the foam molding are summarized in Table 2.

Comparative Example 1

Using a high density polyethylene (NOVATEC HD HY540 (trade name) manufactured by Japan Polychem Corporation) in place of LLDPE (linear low density polyethylene) for forming the coat, a foam molding was produced in the same manner as that in Example 1. The conditions for the production of the expanded beads, properties of the expanded beads, molding conditions and properties of the foam molding are summarized in Table 3. The difference between the melting point of the core and the coat was 6°C and less than 15°C as required in the present invention.

Comparative Examples 2-4

Expanded polypropylene resin beads having no coat were prepared and foam moldings were produced using the thus obtained expanded beads.

First, Polymer 1 (Comparative Example 2) or Polymer 3 (Comparative Examples 3 and 4) was kneaded in a single-screw extruder and extruded in the form of a strand. The strand was cut to obtain resin particles having a weight of 1.0 mg per one particle. The thus obtained resin beads (1,000 g) were charged in an autoclave having an inside volume of 5 liters together with 3,000 g of water, 200 g of an aqueous dispersion containing 10 % by weight of tricalcium phosphate and 25 g of aqueous solution containing 2 % by weight of sodium dodecylbenzenesulfonate, to which isobutane was added in an amount shown in Table 3. The contents in the autoclave were then heated to an expansion temperature shown in Table 3 over a period of 60 minutes and maintained at that temperature for 30 minutes. Thereafter, while feeding compressed nitrogen gas to the autoclave to maintain the pressure inside the autoclave at an expansion pressure shown in Table 3, a valve connected to a bottom of the autoclave was opened to discharge the contents in the autoclave into the atmosphere at ambient temperature, thereby obtaining expanded beads. Next, using the thus obtained expanded beads, foam moldings were produced in the same manner as described in Example 1.

The conditions for the production of the expanded beads, properties of the expanded beads, molding conditions and properties of the foam molding are summarized in Table 3.

Comparative Example 5 (Referential Example)

Using an ethylene-propylene random copolymer (Polymer 5, content of ethylene component: 4.1 % by weight, MFR: 8g/10 min.), a foam molding was prepared in the same manner as described in Example 4 of Japanese Unexamined Patent Publication No.2000-15708. The properties of the expanded beads, molding conditions and properties of the foam molding are summarized in Table 3.

Table 2

| Example No. | | 1 | 2 | 3 | 4 |
|---|---|---|---|---|---|
| Core | Polymer | 1 | 2 | 3 | 4 |
| | Melting point (°C) | 141 | 125 | 148 | 143 |
| Coat | Resin | LLDPE | LLDPE | LLDPE | LLDPE |
| | Density (g/cm3) | 0.907 | 0.907 | 0.907 | 0.907 |
| | Melting point (°C) | 100 | 100 | 100 | 100 |
| | Vicat s. p. (°C) | 88 | 88 | 88 | 88 |
| | Thickness of coat (μm) | 30 | 30 | 30 | 30 |
| | Weight % of coat *1 | 15 | 15 | 15 | 15 |
| Average weight of one bead (mg) *2 | | 1.0 | 1.0 | 1.0 | 1.0 |
| Amount of isobutane (g) | | 200 | 220 | 200 | 200 |
| Expansion temperature (°C) | | 127 | 113 | 138 | 128 |
| Expansion pressure (MPa(G)) | | 2.0 | 1.8 | 2.0 | 2.2 |
| Bulk density of beads (g/L) | | 18 | 15 | 18 | 18 |
| Average cell diameter (μm) | | 190 | 200 | 190 | 240 |
| Inside pressure of beads (MPa(G)) | | 0.34 | 0.4 | 0.34 | 0.18 |
| Pressure in upper chamber 11 (MPa(G)) | | vac | vac | vac | vac |
| Pressure in lower chamber 11 (MPa(G)) | | vac | vac | vac | vac |
| Pressure in upper chamber 12 (MPa(G)) | | 0.12 | 0.06 | 0.14 | 0.17 |
| Pressure in lower chamber 12 (MPa(G)) | | vac | vac | vac | vac |
| Pressure in upper chamber 13 (MPa(G)) | | 0.15 | 0.12 | 0.17 | 0.2 |
| Pressure in lower chamber 13 (MPa(G)) | | 0.15 | 0.12 | 0.17 | 0.2 |
| Pressure in upper chamber 14 (MPa(G)) | | none | none | none | none |
| Pressure in lower chamber 14 (MPa(G)) | | none | none | none | none |
| Pressure in upper chamber 15 (MPa(G)) | | none | none | none | none |
| Pressure in lower chamber 15 (MPa(G)) | | none | none | none | none |
| Line speed (m/min) | | 3.0 | 4.0 | 4.0 | 3.5 |
| Apparent density of foam molding (g/L) | | 20 | 17 | 20 | 25 |
| Fusion-bonding between beads | | good | good | good | good |
| Appearance of foam molding | | good | good | good | good |

*1: based on total weight of core and coat

*2: arithmetic mean of the weight of 100 arbitrarily selected expanded beads

Table 3

| Comparative Example No. | | 1 | 2 | 3 | 4 | 5 |
|---|---|---|---|---|---|---|
| Core | Polymer | 1 | 1 | 3 | 3 | 5 |
| | Melting point (°C) | 141 | 141 | 148 | 148 | 138 |

Table 3 (continued)

| Comparative Example No. | | 1 | 2 | 3 | 4 | 5 |
|---|---|---|---|---|---|---|
| Coat | Resin | HDPE | - | - | - | - |
| | Density (g/cm$^3$) | 0.960 | - | - | - | - |
| | Melting point (°C) | 135 | - | - | - | - |
| | Vicat s. p. (° C) | 128 | - | - | - | - |
| | Thickness of coat (µm) | 47 | - | - | - | - |
| | Weight % of coat *1 | 15 | - | - | - | - |
| Average weight of one bead (mg) *2 | | 1.0 | 1.0 | 1.0 | 1.0 | - |
| Amount of isobutane (g) | | 200 | 190 | 190 | 190 | - |
| Expansion temperature (°C) | | 127 | 127 | 138 | 138 | - |
| Expansion pressure (MPa(G)) | | 2.0 | 1.9 | 1.9 | 1.9 | - |
| Bulk density of beads (g/L) | | 18 | 18 | 18 | 18 | 12 |
| Average cell diameter (µm) | | 200 | 180 | 180 | 180 | - |
| Inside pressure of beads (MPa(G)) | | 0.12 | 0.12 | 0.12 | 0.12 | 0.12 |
| Pressure in upper chamber 11 (MPa(G)) | | vac | vac | vac | vac | none |
| Pressure in lower chamber 11 (MPa(G)) | | vac | vac | vac | vac | none |
| Pressure in upper chamber 12 (MPa(G)) | | 0.25 | 0.28 | 0.35 | 0.14 | vac |
| Pressure in lower chamber 12 (MPa(G)) | | vac | vac | vac | vac | vac |
| Pressure in upper chamber 13 (MPa(G)) | | 0.25 | 0.28 | 0.35 | 0.17 | vac |
| Pressure in lower chamber 13 (MPa(G)) | | 0.25 | 0.28 | 0.35 | 0.17 | 0.2 |
| Pressure in upper chamber 14 (MPa(G)) | | none | none | none | none | 0.2 |
| Pressure in lower chamber 14 (MPa(G)) | | none | none | none | none | vac |
| Pressure in upper chamber 15 (MPa(G)) | | none | none | none | none | vac |
| Pressure in lower chamber 15 (MPa(G)) | | none | none | none | none | vac |
| Line speed (m/min) | | 2.5 | 2.3 | 2.0 | 2.0 | 2.5 |
| Apparent density of foam molding (g/L) | | 20 | 20 | 20 | 20 | 15 |
| Fusion-bonding between beads | | good | good | good | poor | good |
| Appearance of foam molding | | good | good | good | poor | good |

*1: based on total weight of core and coat

*2: arithmetic mean of the weight of 100 arbitrarily selected expanded beads

The relationship between the steam pressures shown in Tables 2 and 3 and the steam temperatures is as follows: 0.06 MPa(G) = 113°C, 0.12 MPa(G) = 124°C, 0.14 MPa(G) = 126°C, 0.15 MPa(G) = 127°C, 0.17 MPa(G) = 130°C, 0.2 MPa(G) = 134°C, 0.25 MPa(G) = 139°C, 0.28 MPa(Ge) = 142°C, 0.35 MPa(G) = 148°C.

As shown in Table 2, in Examples 1-4 in which the composite expansion beads according to the present invention are used, foam moldings without any abnormal inflation can be obtained at a high line speed. The foam moldings did not crack when bent with hands at an angle of 90 degrees and had good fusion-bonding between the expanded beads. The foam moldings have smooth surfaces almost free of gaps between the expanded beads and good appearance.

In contrast, the foam molding obtained in Comparative Example 1 in which the difference between the melting point of the polyolefin resin constituting the core of the expanded beads and the polyolefin polymer constituting the coat thereof is less than 15°C, it is necessary to use a higher steam pressure as compared with that in Examples 1-4. In particular, whereas, in Example 1, the steam pressure was 0.12 MPa(G) in the upper chamber 12 and 0.15 MPa(G) in the upper and lower chambers 13 and 13, the steam pressure of 0.25 MPa(G) was required in each chamber in

Comparative Example 1. Thus, the line speed in Comparative Example 1 was 2.5 m/min., while that in Example 1 was 3.0 m/min.

In Comparative Examples 2 and 3 which are to be compared with Examples 1 and 3, repsectively, the expanded beads had no coats. In Comparative Examples 2 and 3, it was necessary to use a high steam pressure in order to sufficiently fuse-bond the expanded beads. As a consequence, it was necessary to reduce the line speed in order to obtain good foam moldings.

In Comparative Example 4 which is to be compared with Example 3, the expanded beads had no coats. The foam molding was easily cracked when bent with hands and had poor fusion-bonding between beads. The foam molding had a surface containing much gaps between beads as compared with the surface of the foam molding of Example 3, and had poor appearance.

Comparative Example 5 (Referential Example) is the same as Example 4 of Japanese Unexamined Patent Publication No.2000-15708 which gives the highest line speed among the working examples shown. Yet, the line speed is only 2.5 m/min. Thus, the process according to the present invention shows superior production efficiency as compared with the prior art method.

## Claims

1. A process for continuously preparing a polyolefin foam molding, comprising feeding expanded polyolefin resin beads between a pair of upper and lower endless belts continuously traveling along a pair of opposing upper and lower surfaces, respectively, within a passage defined by structural members and rectangular in section, and then successively passing the resin beads through a heating zone and a cooling zone within the passage,
   wherein each of the expanded polyolefin resin beads comprises:

   a core which is in an expanded state and which comprises a crystalline polyolefin resin, and
   a coat which is in a substantially unexpanded state and which surrounds said core, said coat comprising a crystalline polyolefin polymer which is lower in melting point by at least 15°C than that of said crystalline polyolefin resin or a substantially non-crystalline polyolefin polymer which is lower in Vicat softening point by at least 15°C than that of said crystalline polyolefin resin.

2. The process as recited in claim 1, wherein each of the expanded polyolefin resin beads fed to said pair of endless belts has an inside pressure of 0.03 to 0.35 MPa(G).

3. The process as recited in claim 1, wherein the expanded polyolefin resin beads are heated with steam in said heating zone, the temperature of said steam being lower than MPc but not lower than MPs when said coat comprises said crystalline polyolefin polymer and being lower than MPc but not lower than (VSPs + 10°C) when said coat comprises said substantially non-crystalline polyolefin polymer, wherein
   MPc represents the melting point of said crystalline polyolefin resin of said core,
   MPs represents the melting point of said crystalline polyolefin polymer of said coat and
   VSPs represents the Vicat softening point of said substantially non-crystalline polyolefin polymer of said coat.

4. The process as recited in claim 1, wherein said crystalline polyolefin polymer of said coat is a polyethylene resin having a melting point of 125°C or less.

5. The process as recited in claim 1, wherein said crystalline polyolefin resin of said core is a crystalline polypropylene resin.

6. The process as recited in claim 5, wherein said crystalline polypropylene resin has a melting point of Tm (°C) and a water vapor permeability of Y (g/m$^2$/24hr) and
   wherein Tm and Y have the following relationship:

$$(-0.20)\times Tm + 35 \leq Y \leq (-0.33)\times Tm + 60$$

7. The process as recited in claim 1, wherein the expanded polyolefin resin beads are subjected to a compression treatment before being introduced to said heating zone.

FIG. 1

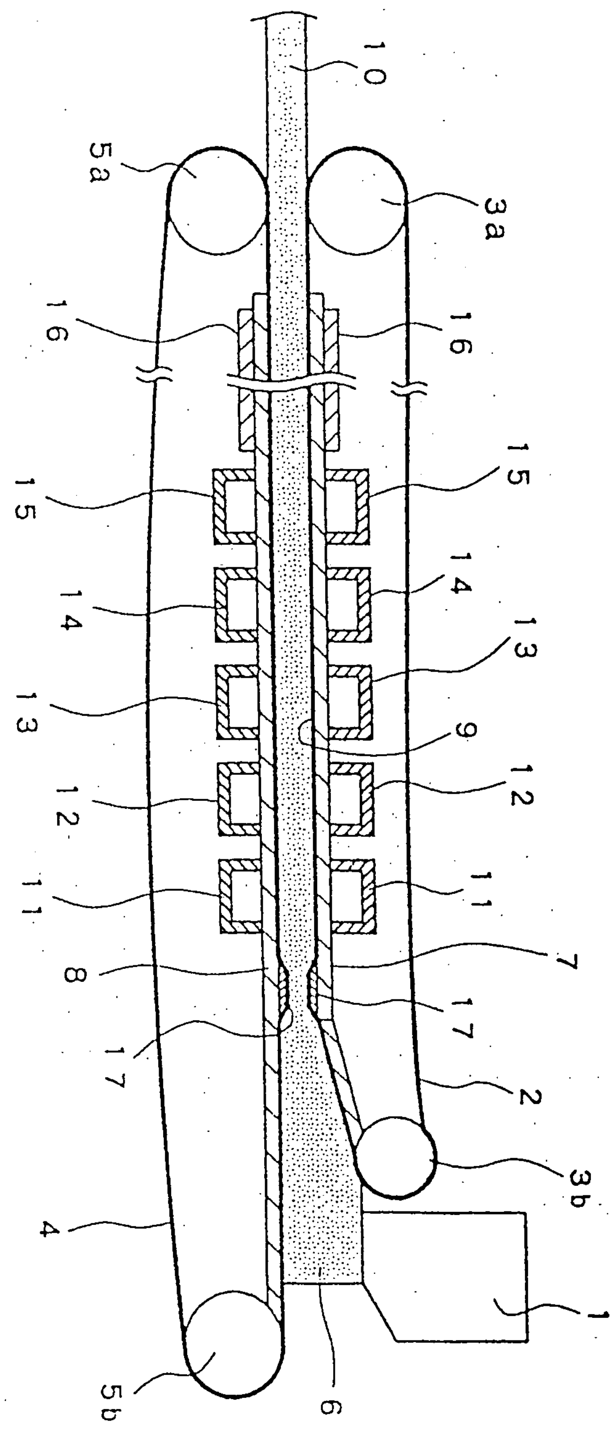

European Patent Office

# EUROPEAN SEARCH REPORT

Application Number
EP 05 00 6190

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 968 430 A (NAITO & AL.) 19 October 1999 (1999-10-19) * figure 1 * | 1-7 | B29C44/30 B29C44/44 C08J9/232 |
| D | & JP 10 180888 A (JSP CORP) 7 July 1998 (1998-07-07) | | |
| Y | US 6 027 806 A (ABE & AL.) 22 February 2000 (2000-02-22) * examples * * claims * | 1-7 | |

TECHNICAL FIELDS SEARCHED (Int.Cl.7)
B29C
C08J

The present search report has been drawn up for all claims

| Place of search | Date of completion of the search | Examiner |
|---|---|---|
| The Hague | 14 September 2005 | Oudot, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 05 00 6190

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2005

| Patent document cited in search report | Publication date | Patent family member(s) | Publication date |
|---|---|---|---|
| US 5968430 A | 19-10-1999 | DE 69724753 D1 | 16-10-2003 |
| | | DE 69724753 T2 | 12-08-2004 |
| | | EP 0850744 A2 | 01-07-1998 |
| | | JP 10180888 A | 07-07-1998 |
| | | SG 71742 A1 | 18-04-2000 |
| | | TW 401345 B | 11-08-2000 |
| JP 10180888 A | 07-07-1998 | DE 69724753 D1 | 16-10-2003 |
| | | DE 69724753 T2 | 12-08-2004 |
| | | EP 0850744 A2 | 01-07-1998 |
| | | SG 71742 A1 | 18-04-2000 |
| | | TW 401345 B | 11-08-2000 |
| | | US 5968430 A | 19-10-1999 |
| US 6027806 A | 22-02-2000 | CN 1222536 A | 14-07-1999 |
| | | EP 0928806 A1 | 14-07-1999 |

EPO FORM P0459

For more details about this annex : see Official Journal of the European Patent Office, No. 12/82